# EUROPEAN PATENT APPLICATION

(11) **EP 2 413 429 A2**
(43) Date of publication of application: **01.02.2012**
(21) Application number: 11175772.0
(22) Date of filing: 28.07.2011
(51) Int. Cl.: H01R 3/00, H02G 3/00

(54) **Charging device for vehicle and vehicle**

(30) Priority: 30.07.2010 JP 2010171608
(71) Applicant: Kabushiki Kaisha Toyota Jidoshokki, Kariya-shi, Aichi 448-8671 (JP)
(72) Inventor: Hirayama, Yuichi, Kariya-shi, Aichi 448-8671 (JP); Kobayashi, Mitsugu, Kariya-shi, Aichi 448-8671 (JP); Mabuchi, Mitsuhiro, Kariya-shi, Aichi 448-8671 (JP); Hika, Koji, Kariya-shi, Aichi 448-8671 (JP); Togano, Hiroki, Kariya-shi, Aichi 448-8671 (JP); Ogawa, Takashi, Kariya-shi, Aichi 448-8671 (JP)
(74) Representative: TBK

(57) **Abstract**

A charging device for a vehicle includes a device-side power line communication (PLC) modem, a device-side control pilot (CPLT) signal generating circuit, a device-side CPLT signal detecting circuit and a device-side low-pass filter (LPF). The device-side PLC modem is used for PLC between the vehicle and the charging device. The device-side CPLT signal generating circuit is used for generating CPLT signals. The device-side CPLT signal detecting circuit is used for detecting the CPLT signals transmitted from the vehicle through the signal line to determine whether or not the vehicle is ready for charging and whether or not the charging is completed. The device-side LPF is connected to an input of the device-side CPLT signal detecting circuit and having such a frequency characteristics that allows the CPLT signals to pass through the device-side LPF but removes signals having frequencies in a frequency band used for PLC.

## Description

### BACKGROUND OF THE INVENTION

The present invention relates to a charging device for a vehicle and also to a vehicle.

With the popularization of an electric vehicle and a plug-in hybrid vehicle, a charging facility for the vehicles is increasingly needed. The Japanese Patent Application Publication No. 2010-93891 discloses a plug-in hybrid vehicle having a first charging line for charging a battery from an external power source through a charging cable, a first supply line for supplying power from the battery through a vehicle outlet and a second supply line for supplying power through the charging cable and the vehicle outlet. According to the Publication, a state of connection of the charging cable with the vehicle is detected and either of the first and second supply lines is selected according to the detected state of connection for supplying power through the selected supply line and the vehicle outlet.

It has been known that control pilot (CPLT) signals are transmitted between a charging device and a plug-in hybrid vehicle through a charging cable, and the charging device and the plug-in hybrid vehicle detect such CPLT signals, so that the state of the vehicle is monitored and charging for the vehicle is controlled, accordingly.

In the plug-in hybrid vehicle in the cited Publication, a proximity detection (PD) signal is used for detecting the state of connection between a plug of the charging cable and a receptacle of the vehicle. CPLT signal detecting circuits for detecting CPLT signals are provided in the charging device and the plug-in hybrid vehicle, respectively, and a PD signal detecting circuit is provided in the plug-in hybrid vehicle.

On the other hand, it has been proposed that communication between the charging device and the plug-in hybrid vehicle should be performed by power line communication (PLC). However, if the communication between the vehicle having the CPLT signal detecting circuit and the PD signal detecting circuit and the charging device having the CPLT signal detecting circuit is performed by PLC, there is a fear that the CPLT signal detecting circuit and the PD signal detecting circuit may malfunction due to the PLC signals transmitted through the power line or through a ground line.

The present invention is directed to prevent the CPLT signal detecting circuits provided in the charging device and the vehicle from malfunctioning due to the influence of PLC.

### SUMMARY OF THE INVENTION

In accordance with the present invention, a charging device for a vehicle includes a device-side power line communication modem, a device-side control pilot signal generating circuit, a device-side control pilot signal detecting circuit and a device-side low-pass filter. A charging cable includes a power line, a ground line and a signal line. Power is supplied from the charging device to the vehicle through the power line. The device-side power line communication modem is used for power line communication between the vehicle and the charging device. The device-side control pilot signal generating circuit is used for generating control pilot signals. The device-side control pilot signal detecting circuit is used for detecting the control pilot signals transmitted from the vehicle through the signal line to determine whether or not the vehicle is ready for charging and whether or not the charging is completed. The device-side low-pass filter is connected to an input of the device-side control pilot signal detecting circuit and has such a frequency characteristics that allows the control pilot signals to pass through the device-side low-pass filter but removes signals having frequencies in a frequency band used for power line communication.

A vehicle has a receptacle being connected to a plug of a charging cable.

A charging cable includes a ground line, a power line and a signal line. Power is supplied from a charging device to the vehicle through the power line. The vehicle includes a vehicle-side power line communication modem, a vehicle-side proximity detection signal circuit, a first vehicle-side low-pass filter, a vehicle-side control pilot signal detecting circuit and a second vehicle-side low-pass filter. The vehicle-side power line communication modem is used for power line communication between the charging device and the vehicle. The vehicle-side proximity detection signal circuit is used for detecting signals indicative of a state of connection between the receptacle of the vehicle and the plug of the charging cable. The first vehicle-side low-pass filter is connected to an input of the vehicle-side proximity detection signal circuit and has such a frequency characteristics that removes signals having frequencies in a frequency band used for power line communication. The vehicle-side control pilot signal detecting circuit is used for detecting the control pilot signals transmitted from the charging device through the signal line. The second vehicle-side low-pass filter is connected to an input of the vehicle-side control pilot signal detecting circuit and has such a frequency characteristics that allows the control pilot signals to pass through the second vehicle-side low-pass filter but removes signals having frequencies in a frequency band used for power line communication.

A charging device for a vehicle includes a device-side power line communication modem, a device-side control pilot signal generating circuit and a device-side control pilot signal detecting circuit. The charging cable includes the power line, a ground line and a signal line. Power is supplied from the charging device to the vehicle through the power line. The vehicle includes a vehicle-side power line communication modem. The device-side power line communication modem is used for power line communication between the vehicle and the charging device. The device-side control pilot signal generating circuit is used for generating control pilot signals. The device-side control pilot signal detecting circuit is used for detecting the control pilot signals transmitted from the vehicle through the signal line. Detection for a control pilot signal is performed in the device-side control pilot signal detecting circuit when there is no power line communication between the device-side power line communication modem and the vehicle-side power line communication modem.

A vehicle has a receptacle being connected to a plug of a charging cable. The charging cable includes a ground line, a power line and a signal line. Power is supplied from a charging device to the vehicle through the power line. The charging device includes a device-side power line communication modem. The vehicle includes a vehicle-side power line communication modem, a vehicle-side proximity detection signal circuit and a vehicle-side control pilot signal detecting circuit. The vehicle-side power line communication modem is used for power line communication between the charging device and the vehicle. The vehicle-side proximity detection signal circuit is used for detecting signals indicative of a state of connection between the receptacle and the plug. Detection for a proximity detection signal is performed in the vehicle-side proximity detection signal circuit when there is no power line communication between the vehicle-side power line communication modem and the device-side power line communication modem. The vehicle-side control pilot signal detecting circuit is used for detecting control pilot signals transmitted from the charging device through the signal line. Detection for a control pilot signal is performed in the vehicle-side control pilot signal detecting circuit when there is no power line communication between the vehicle-side power line communication modem and the device-side power line communication modem.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a configuration diagram showing a charging device and a vehicle according to a first preferred embodiment of the present invention;
Fig. 2 is a configuration diagram showing a CPLT signal control circuit and a PD signal detecting circuit in the charging device and the vehicle of Fig. 1;
Fig. 3 is an illustrative view showing a low-pass filter (LPF) of Fig. 1;
Fig. 4 is a configuration diagram showing a charging device and a vehicle according to a second preferred embodiment of the present invention;
Fig. 5 is a configuration diagram showing a charging device and a vehicle according to a third preferred embodiment of the present invention;
Fig. 6A is a flowchart showing operation of the CPLT signal detecting circuit in the charging device of Fig. 5; and
Fig. 6B is a flowchart showing operations of the PD signal detecting circuit and the CPLT signal detecting circuit in the vehicle of Fig. 5.

### DETAILED DESCRIPTION OF THE PREFERRED EMBODIMENTS

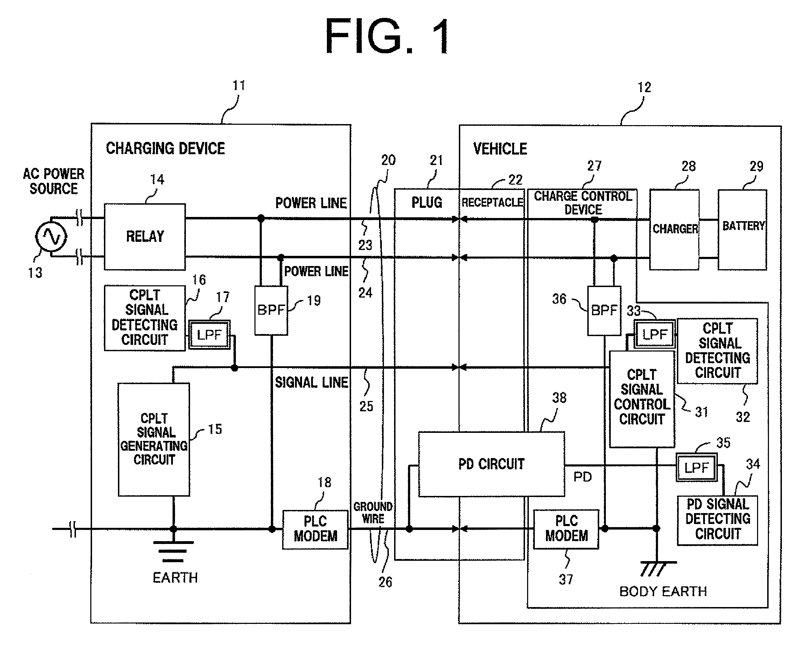

The following will describe a first preferred embodiment of the present invention with reference to Figs. 1 through 3. Fig. 1 shows a charging device 11 and a vehicle 12 according to the first preferred embodiment of the present invention, in which alternating-current (AC) power of the charging device 11 is supplied to the vehicle 12. The charging device 11 has a relay 14, a control pilot (CPLT) signal generating circuit 15 serving as a device-side control pilot signal generating circuit, a CPLT signal detecting circuit 16 serving as a device-side control pilot signal detecting circuit, a low-pass filter (LPF) 17 serving as a device-side low-pass filter, a power line communication (PLC) modem 18 serving as a device-side power line communication modem and a band-pass (BPF) filter 19.

The relay 14 is used for supplying AC power from an AC power source 13 to the vehicle 12 through power lines 23, 24, and a charging cable 20 includes the power lines 23, 24, a signal line 25 and a ground line 26. The CPLT signal generating circuit 15 generates CPLT signals having a square-wave pulse. The CPLT signal generating circuit 15 is also operable to modify the pulse width of ON-pulse of the CPLT signal thereby to report to the vehicle 12 the amount of available power for the vehicle 12. The CPLT signals are transmitted to the vehicle 12 through the signal line (pilot line) 25.

The CPLT signal detecting circuit 16 detects the voltage on the signal line 25 thereby to determine whether or not the vehicle 12 is ready for charging and also whether or not the charging is completed. The PLC modem 18 is connected in the ground line 26 for transmitting PLC signals to a PLC modem 37 serving as a vehicle-side power line communication modem provided in the vehicle 12.

The LPF 17 has such a frequency characteristics that allows the CPLT signals to pass therethrough but removes signals having frequencies greater than a predetermined level that is the lower limit of a frequency band used for PLC.

The CPLT signal detecting circuit 16 detects a voltage level of the CPLT signals from which signals in the frequency band used for PLC are removed by the LPF 17. The BPF 19 is connected between the power lines 23, 24 and the ground line 26 for allowing only signals for PLC to pass therethrough.

The vehicle 12 has a receptacle (connector) 22, a charge control device 27, a charger 28 and a chargeable battery 29. The receptacle 22 of the vehicle 12 is connected to a plug 21 of the charging cable 20 for supplying AC power from the charging device 11 to the vehicle 12.

The charge control device 27 includes a CPLT signal control circuit 31, a CPLT signal detecting circuit 32 serving as a vehicle-side control pilot signal detecting circuit, a LPF 33 serving as a first vehicle-side low-pass filter, a LPF 35 serving as a second vehicle-side low-pass filter, a PD signal detecting circuit 34 serving as a vehicle-side proximity detection signal detecting circuit, a BPF 36 and a PLC modem 37.

The CPLT signal control circuit 31 controls the voltage level of the CPLT signals transmitted through the signal line 25. The CPLT signal detecting circuit 32 detects a voltage level and the pulse width of the ON-pulse of CPLT signals having removed therefrom by the LPF 33 signals in the frequency band for PLC. The BPF 36 is connected between the power lines 23, 24 and the ground line 26 for allowing only signals for PLC to pass therethrough.

A PD circuit 38 serving as a vehicle-side proximity detection circuit is connected across the plug 21, the receptacle 22 and the charge control device 27 for generating PD signals indicative of the state of connection between the plug 21 and the receptacle 22. The LPF 35 has frequency characteristics that allows the PD signals to pass through the LPF 35, but removes therefrom signals having a frequency greater than a predetermined value that is lower limit in the frequency band for PLC.

The PD signal detecting circuit 34 detects a voltage level of PD signals having removed therefrom by the LPF 35 signals in the frequency band for PLC. The PLC modem 37 is connected in the ground line 26 for PLC with the PLC modem 18 provided in the charging device 11 through the ground line 26.

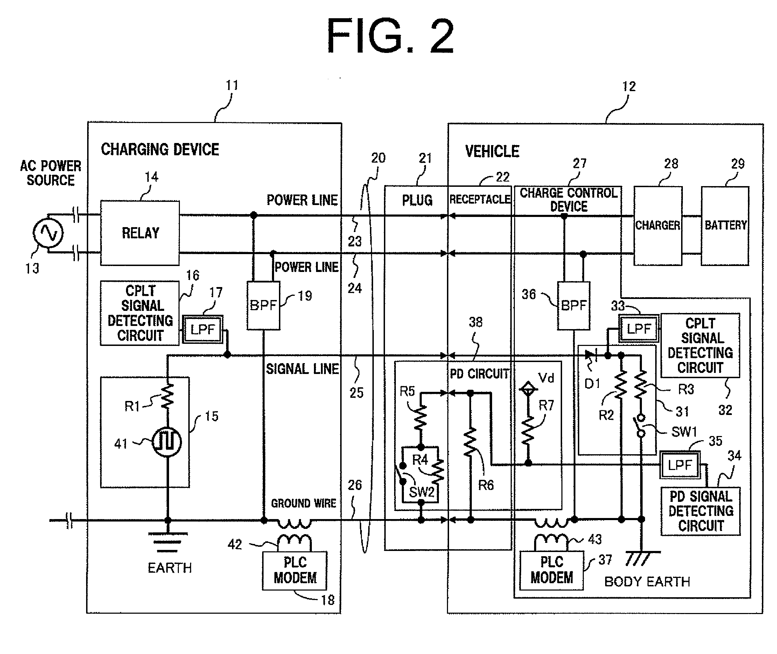

Fig. 2 shows an example of the CPLT signal generating circuit 15, the CPLT signal control circuit 31 and the PD circuit 38. The CPLT signal generating circuit 15 of the charging device 11 includes an oscillator 41 which generates signals having a square-wave pulse and a resistor R1 which is connected at one end thereof to the oscillator 41 and at the other end thereof to the signal line 25.

The PLC modem 18 is connected in series in the ground line 26 through a coupling transformer 42 having primary and secondary windings. The CPLT signal control circuit 31 in the vehicle 12 is used for changing the voltage level of CPLT signals. The CPLT signal control circuit 31 includes a diode D1 connected in the signal line 25, resistors R2, R3 connected at one end thereof to the cathode of the diode D1 and a switch SW1 connected at one end thereof in series to the resistor R3. The other ends of the resistor R2 and the switch SW1 are grounded to the body of the vehicle 12. A transistor may be used as the switch SW1 for changing the voltage level of CPLT signals by switching the transistor by any central processing unit (CPU) (not shown).

When the switch SW1 is in ON-state, the level of the output voltage of the CPLT signal control circuit 31 is determined by the output voltage of the oscillator 41 in the CPLT signal generating circuit 15 as divided by the total resistance of the resistor R1 of the CPLT signal generating circuit 15 and the parallel resistors R2, R3 of the CPLT signal control circuit 31.

When the switch SW1 is in OFF-state, the level of the output voltage of the CPLT signal control circuit 31 is determined by the output voltage of the oscillator 41 as divided by the total resistance of the resistors R1, R2.

Thus, the voltage level of the CPLT signals is changed by turning on and off the switch SW1, so that the charging device 11 is notified of the completion of preparation or the completion of charging of the vehicle 12.

The CPLT signal detecting circuit 32 detects the voltage level of CPLT signals having removed therefrom by the LPF 33 signals in the frequency band for PLC, so that the CPLT signal detecting circuit 32 is prevented from malfunctioning.

The PD circuit 38 is connected across the plug 21, the receptacle 22 and the charge control device 27 for generating signals indicative of the connection between the plug 21 and the receptacle 22.

Specifically, the resistor R4 connected at one end thereof to the ground line 26, the switch SW2 connected in parallel to the resistor R4, and a resistor R5 connected in series to the resistor R4 are provided as a part of the PD circuit 38. The switch SW2 is a mechanical or electrical switch which is turned on when the plug 21 is inserted firmly into the receptacle 22 to be in locked state, and turned off otherwise.

A resistor R6 is provided in the receptacle 22 as a part of the PD circuit 38. One end the resistor R6 is connected to the connecting point of the receptacle 22 indicated by arrow shown in the PD circuit 38 of Fig. 2. When the receptacle 22 and the plug 21 are connected to each other, the resistors R5, R6 are connected to each other. The other end of the resistor R6 is connected to the ground line 26 on the plug 21 side through the connecting points of the receptacle 22 and the plug 21.

A resistor R7 connected at one end thereof to a power supply voltage Vd is provided in the charge control device 27 as a part of the PD circuit 38. The other end of the resistor R7 is connected to one end of the resistor R6 that is connected to the connecting point of the receptacle 22.

When the plug 21 is inserted in the receptacle 22 but insufficiently connected to the receptacle 22, the switch SW2 is in OFF state. In this case, if two pairs of the connecting points indicated by arrows in the plug 21 and the receptacle 22 of Fig. 2 are electrically connected to each other, the total resistance of the resistors R4 through R6 is determined by the resistance of the resistor R6 and the series resistors R4, R5 connected in parallel to the resistor R6.

When the plug 21 is inserted firmly in the receptacle 22 to be in locked state, the switch SW2 is in ON state. In this case, since the resistor R4 is shorted, the total resistance of the resistors R4 through R6 is determined by the parallel resistors R5, R6.

Depending on the state of connection between the plug 21 and the receptacle 22, the above total resistance is varied, and the voltage at the connection point between the resistors R6, R7, or the voltage level of PD signal that is the output signal of the PD circuit 38, is varied, accordingly.

When the plug 21 and the receptacle 22 are not connected, the resistors R4, R5 are separated from the resistor R6, so that a voltage obtained by dividing the power supply voltage Vd by the resistors R6, R7 is outputted to the PD signal detecting circuit 34.

Thus, detecting the voltage level of the output signal of the PD circuit 38 by the PD signal detecting circuit 34, state of connection between the plug 21 and the receptacle 22, i.e. whether the plug 21 and the receptacle 22 are connected firmly to each other to be in locked state, connected only insufficiently, or not connected.

The PD signal detecting circuit 34 that detects the voltage level of the PD signals having removed therefrom signals in the frequency band for PLC is prevented from malfunctioning.

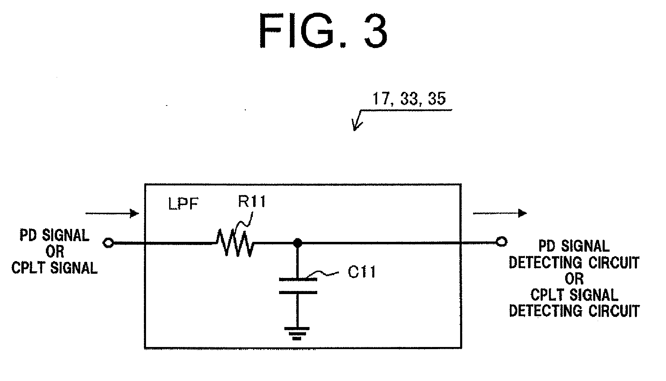

Fig. 3 shows in detail the LPF 17, 33 or 35. The LPF 17 includes a resistor R11 and a capacitor C11. The resistor R11 receives at one end thereof CPLT signals or RD signals and is connected at the other end thereof to one end of the capacitor C11 and the input terminal of the CPLT signal detecting circuits 16, 32 or the PD signal detecting circuit 34. The other end of the capacitor C11 is grounded.

The resistance of the resistor R11 and the capacitance of the capacitor C11 are set such that the LPF 17 has frequency characteristics that remove signals in a frequency band for PLC (for example more than 100 kHz) and allow signals in the frequency band for CPLT (for example a few kHz) to pass through the LPF 17. The LPF 17 may have only frequency characteristics that remove signals in a frequency band for PLC.

According to the first preferred embodiment of the present invention, when communication between the charging device 11 and the vehicle 12 is performed by PLC, and CPLT signals are transmitted and received through the signal line 25, the CPLT signal detecting circuits 16, 32 and the PD signal detecting circuit 34 are prevented from malfunctioning by input of PLC signals.

Detection of the state of connection and charging between the plug 21 and the receptacle 22 by using CPLT and PD signals helps to improve the safety of the vehicle user during charging. Furthermore, the use of PLC ensures high-speed and secure data communication between the charging device 11 and the vehicle 12.

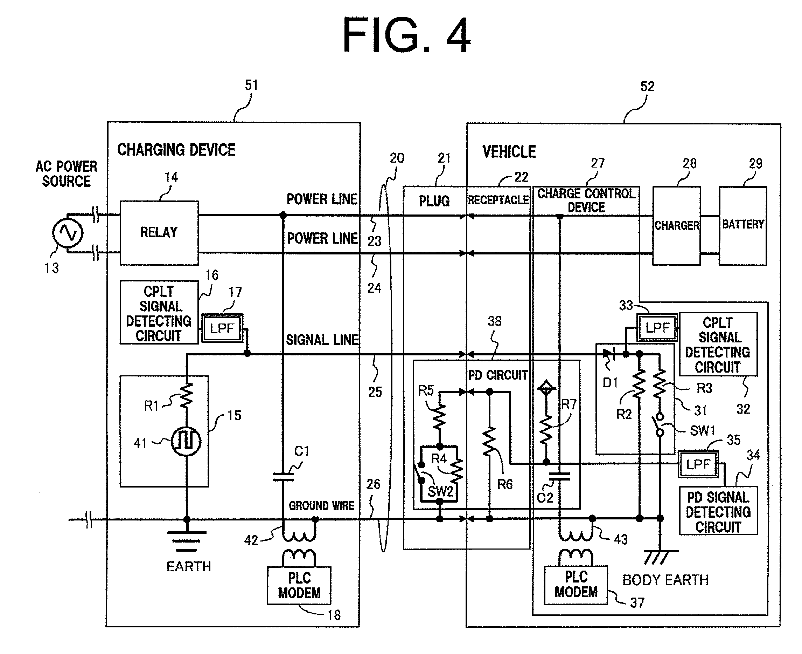

The following will describe a second preferred embodiment of the present invention. Fig. 4 shows a configuration diagram of the charging device 51 and a vehicle 52 according to the second preferred embodiment of the present invention. In Fig. 4, the same reference numerals denote the circuits substantially identical to the counterparts in Figs. 1, 2 and, therefore, the description thereof will be omitted. According to the second preferred embodiment, the PLC modems 18, 37 are connected between the ground line 26 and the power line 23 through the respective coupling transformers 42, 43.

One end of the primary wiring of the coupling transformer 42 of the charging device 51 is connected to the ground line 26, and the other end of the primary wiring is connected to the power line 23 through the capacitor C1, and the secondary wiring is connected to the PLC modem 18. Thus, the capacitor C1 is connected between the power line 23 and the ground line 26.

One end of the primary wiring of the coupling transformer 43 of the vehicle 52 is connected to the ground line 26, and the other end of the primary wiring is connected to the power line 23 through the capacitor C2, and the secondary wiring is connected to the PLC modem 37. Thus, the capacitor C2 is connected between the power line 23 and the ground line 26.

In connecting the PLC modems 18, 37 between the power line 23 and the ground line 26, the LPF 17 is connected to the input of the CPLT signal detecting circuit 16 of the charging device 51, the LPF 33 is connected to the input of the CPLT signal detecting circuit 32 of the vehicle 52, and the LPF 35 is connected to the input of the PD signal detecting circuit 34. By so doing, the CPLT signal detecting circuits 16, 32 and PD signal detecting circuit 34 are prevented from malfunctioning due to the influence of PLC signals.

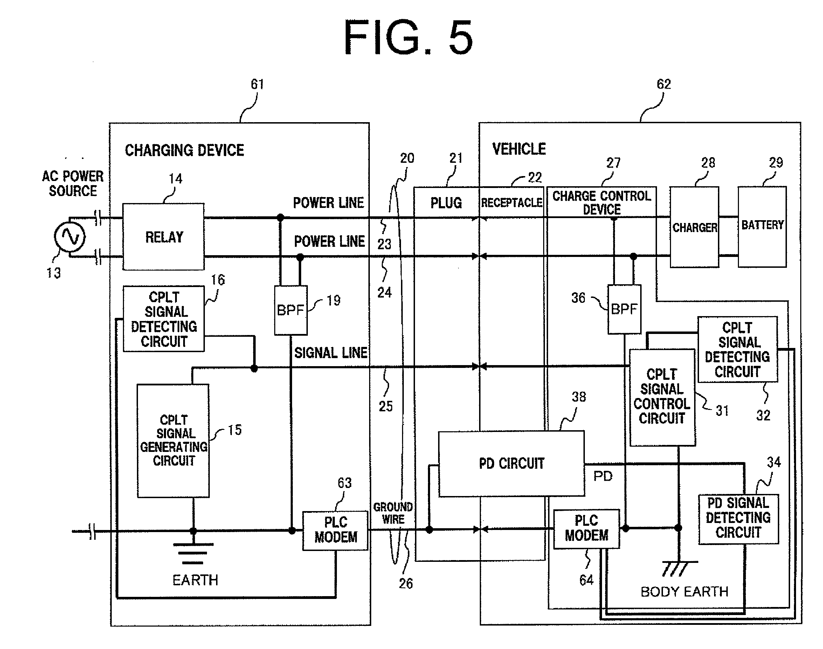

The following will describe a third preferred embodiment of the present invention. Fig. 5 shows a configuration diagram of a charging device 61 and a vehicle 62 according to the third preferred embodiment of the present invention. According to the third preferred embodiment of the present invention, detection for CPLT and PD signals is performed when a PLC modem 63 serving as a device-side power line communication modem transmits and receives no signal.

In Fig. 5, the same reference numerals denote the circuits substantially identical to the counterparts in Fig. 1 and, therefore, the description thereof will be omitted. The PLC modem 63 of the charging device 61 is connected in the ground line 26 for generating to the CPLT signal detecting circuit 16 signals that are indicative of whether or not it is time to transmit and receive PLC signals.

The CPLT signal detecting circuit 16 of the charging device 61 is operable to determine whether or not a signal is received that is indicative that it is not time to transmit and receive PLC signal. If NO (or if it is not time to transmit PLC signals), the detection for CPLT signals is performed, and if YES (or if it is time to transmit PLC signals), no detection for CPLT signals is performed.

The PLC modem 64 of the vehicle 62 serving as a vehicle-side power line communication modem generates to the CPLT signal detecting circuit 32 and the PD signal detecting circuit 34 signal that is indicative that it is not time to transmit and receive PLC signals.

The CPLT signal detecting circuit 32 determines whether or not a signal indicative that it is not time to transmit or receive PLC signals. If YES (or if it is not time to transmit PCL signals), the detection for CPLT signals is performed, and if NO (or if it is time to transmit PCL signal), no detection for CPLT signal is performed.

The PD signal detecting circuit 34 determines whether or not signal indicative that it is not time to transmit or receive the PLC signal. If YES (or if it is not time to transmit PLC signal), the detection for CPLT signals is performed, and if NO (or if it is time to transmit PLC signal), no detection for PD signals is performed.

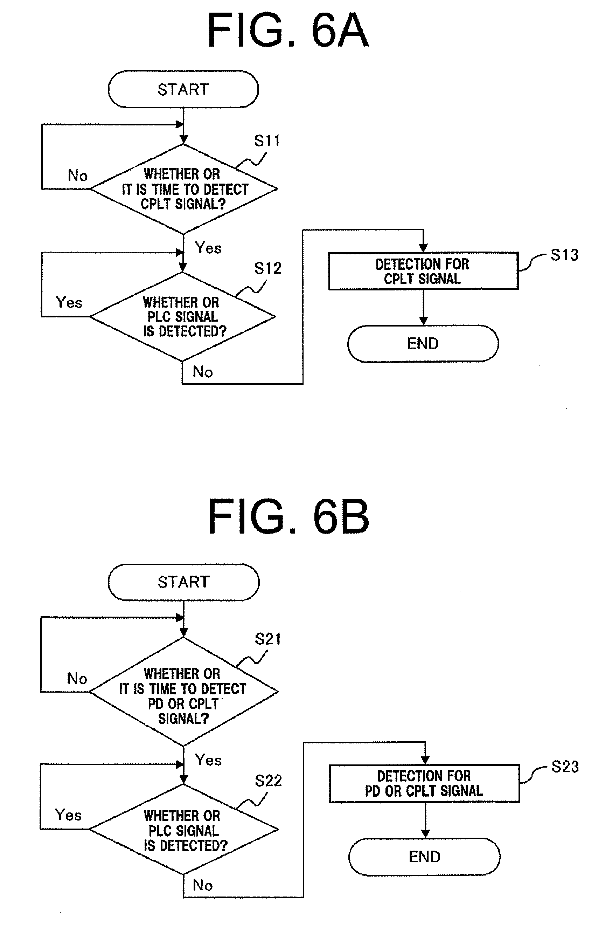

Figs. 6A, 6B are flowcharts showing the operations of the CPLT signal detecting circuits 16, 32 and the PD signal detecting circuit 34. Procedures according to the flowcharts are performed by any hardware or CPU provided in the charging device 61 or the vehicle 62.

Referring to Fig. 6A, the following will describe the operation of the CPLT signal detecting circuit 16 of the charging device 61. At step S11, it is determined whether or not it is time to detect CPLT signal. If NO at step 11, step S11 is repeated.

If YES at step 11, it is determined at step S12 whether or not PLC signal serving as carrier signal is detected in the ground line or the power line serving as a communication line to which the PLC modem 63 is connected. Detection for PLC signal, including PLC signal transmitted by the device itself, is performed.

If YES at step S12, the detection for the PLC signal at step S12 is repeated. If NO at step S12, detection for CPLT signal is performed at step S13.

Referring to Fig. 6B, the following will describe the operations of the PD signal detecting circuit 34 and the CPLT signal detecting circuit 32 provided in the vehicle 62. At step S21, it is determined whether or not it is time to detect PD or CPLT signal. If NO at step 21, step S21 is repeated.

If YES at step S21, it is determined at step S22 whether or not PLC signal serving as carrier signal is detected. If YES at step S22, step S22 is repeated.

If NO at step S22, detection for PD or CPLT signal is performed at step S23. According to the third preferred embodiment of the present invention, the detection for PD and CPLT signal may be performed without any influence of PLC signal. Therefore, the PD signal detecting circuit 34 and the CPLT signal detecting circuits 16, 32 are prevented from malfunctioning due to the PLC signal.

In the above-described preferred embodiments of the present invention, AC power is supplied to the vehicle. Alternatively, direct-current (DC) power may be supplied to the vehicle.

A charging device for a vehicle includes a device-side power line communication (PLC) modem, a device-side control pilot (CPLT) signal generating circuit, a device-side CPLT signal detecting circuit and a device-side low-pass filter (LPF). The device-side PLC modem is used for PLC between the vehicle and the charging device. The device-side CPLT signal generating circuit is used for generating CPLT signals. The device-side CPLT signal detecting circuit is used for detecting the CPLT signals transmitted from the vehicle through the signal line to determine whether or not the vehicle is ready for charging and whether or not the charging is completed. The device-side LPF is connected to an input of the device-side CPLT signal detecting circuit and having such a frequency characteristics that allows the CPLT signals to pass through the device-side LPF but removes signals having frequencies in a frequency band used for PLC.

## Claims

1. A charging device (11, 51) for a vehicle (12, 52), a charging cable (20) includes the power line (23, 24), a ground line (26) and a signal line (25), power is supplied from the charging device (11, 51) to the vehicle (12, 52) through the power line (23, 24), the charging device (11, 51) comprising:
a device-side power line communication modem (18) for power line communication between the vehicle (12, 52) and the charging device (11, 51);
a device-side control pilot signal generating circuit (15) for generating control pilot signals,
a device-side control pilot signal detecting circuit (16) for detecting the control pilot signals transmitted from the vehicle (12, 52) through the signal line to determine whether or not the vehicle (12, 52) is ready for charging and whether or not the charging is completed, and
a device-side low-pass filter (17) connected to an input of the device-side control pilot signal detecting circuit (16) and having such a frequency characteristics that allows the control pilot signals to pass through the device-side low-pass filter (17) but removes signals having frequencies in a frequency band used for power line communication.

2. The charging device (11, 51) according to claim 1, **characterized in that** device-side power line communication modem (18) is connected in the ground line (26).

3. The charging device (11, 51) according to claim 1, **characterized in that** the device-side power line communication modem (18) is connected between the power line (23, 24) and the ground line (26).

4. The charging device (11, 51) according to claim 1 or 2, **characterized in that** a band-pass filter (19) is connected between the power line (23, 24) and the ground line (26) for allowing only signals for power line communication to pass through the band-pass filter (19).

5. The charging device according to claim 1 or 3, **characterized in that** a capacitor (C1) is connected between the power line (23) and the ground line (26).

6. A vehicle (12, 52) having an receptacle (22) being connected to a plug (21) of a charging cable (20), the charging cable (20) includes a ground line (26), a power line (23, 24), a signal line (25), power is supplied from a charging device (11, 51) to the vehicle (12, 52) through the power line (23, 24), the vehicle (11, 51) comprising:
a vehicle-side power line communication modem (37) for power line communication between the charging device (11, 51) and the vehicle (12, 52);
a vehicle-side proximity detection signal detecting circuit (34) for detecting signals indicative of a state of connection between the receptacle (22) of the vehicle (12, 52) and the plug (21) of the charging cable (20),
a first vehicle-side low-pass filter (33) connected to an input of the vehicle-side proximity detection signal circuit (38) and having such a frequency characteristics that removes signals having frequencies in a frequency band used for power line communication,
a vehicle-side control pilot signal detecting circuit (32) for detecting the control pilot signals transmitted from the charging device (11, 51) through the signal line (25), and
a second vehicle-side low-pass filter (35) connected to an input of the vehicle-side control pilot signal detecting circuit (32) and having such a frequency characteristics that allows the control pilot signals to pass through the second vehicle-side low-pass filter (35) but removes signals having frequencies in a frequency band used for power line communication.

7. The vehicle (12, 52) according to claim 6, **characterized in that** vehicle-side power line communication modem (37) is connected in the ground line (26).

8. The vehicle (12, 52) according to claim 6, **characterized in that** the vehicle-side power line communication modem (37) is connected between the power line (23, 24) and the ground line (26).

9. The vehicle (12, 52) according to claim 6 or 7, **characterized in that** a band-pass filter (19) is connected between the power line (23, 24) and the ground line (26) for allowing only signals for power line communication to pass through the band-pass filter (19).

10. The vehicle (12, 52) according to claim 6 or 8, **characterized in that** a capacitor (C2) is connected between the power line (23) and the ground line (26).

11. A charging device (61) for a vehicle (62), a charging cable (20) includes the power line (23, 24), a ground line (26) and a signal line (25), power is supplied from the charging device (61) to the vehicle (62) through the power line (23, 24), the vehicle (62) includes a vehicle-side power line communication modem (64), the charging device (61) comprising:
a device-side power line communication modem (63) for power line communication between the vehicle (62) and the charging device (61);
a device-side control pilot signal generating circuit (15) for generating control pilot signals, and
a device-side control pilot signal detecting circuit (16) for detecting the control pilot signals transmitted from the vehicle (62) through the signal line (25), detection for a control pilot signal is performed when there is no power line communication between the device-side power line communication modem (63) and the vehicle-side power line communication modem (64).

12. The charging device (61) according to claim 11, **characterized in that** the device-side power line communication modem (63) generates to the device-side control pilot signal detecting circuit (16) signals indicative of when there is no power line communication between the device-side power line communication modem (63) and the vehicle-side power line communication modem (64).

13. A vehicle (62) having a receptacle (22) being connected to a plug (21) of a charging cable (20), the charging cable (20) includes a ground line (26), a power line (23, 24) and a signal line (25), power is supplied from a charging device (61) to the vehicle (62) through the power line (23, 24), the charging device (61) includes a device-side power line communication modem (63), the vehicle (62) comprising:
a vehicle-side power line communication modem (64) for power line communication between the charging device (61) and the vehicle (62);
a vehicle-side proximity detection signal detecting circuit (34) for detecting signals indicative of a state of connection between the receptacle (22) of the vehicle (62) and the plug (21) of the charging cable (20), detection for a proximity detection signal is performed when there is no power line communication between the vehicle-side power line communication modem (64) and the device-side power line communication modem (63), and
a vehicle-side control pilot signal detecting circuit (32) for detecting control pilot signals transmitted from the charging device (61) through the signal line (25), detection for a control pilot signal is performed when there is no power line communication between the vehicle-side power line communication modem (64) and the device-side power line communication modem (63).

14. The vehicle (62) according to claim 13, **characterized in that** the vehicle-side power line communication modem (64) generates to the vehicle-side proximity detection signal detecting circuit (34) and the vehicle-side control pilot signal detecting circuit (32) signals indicative of when there is no power line communication between the vehicle-side power line communication modem (64) and the device-side power line communication modem (63).
